# EUROPEAN PATENT SPECIFICATION

(11) **EP 1 875 342 B1**
(45) Date of publication and mention of the grant of the patent: **19.12.2018**
(21) Application number: 06725558.8
(22) Date of filing: 05.04.2006
(51) Int. Cl.: G06F 9/44, B61L 27/00, B61L 23/00

(54) **CONTROL SYSTEM FOR RAILWAY SIGNALLING NETWORKS**
KONTROLLSYSTEM FÜR EISENBAHN-SIGNALISIERUNGSNETZWERKE
SYSTÈME DE COMMANDE POUR UNE RÉSEAUX DE SIGNALISATION FERROVIAIRE

(30) Priority: 21.04.2005 EP 05425257
(43) Date of publication of application: 09.01.2008
(73) Proprietor: ALSTOM FERROVIARIA S.P.A., 12038 Savigliano (Cuneo) (IT)
(72) Inventor: TRAMONTANA, Francesco, I-61034 Fossombrone (IT); MINKOWITZ, Cydney, I-40122 Bologna (IT)
(74) Representative: Karaghiosoff, Giorgio Alessandro
(86) International application number: PCT/EP2006/061324
(87) International publication number: WO 2006/111469

(56) References cited:
- EP-A- 1 043 660
- US-A1- 2005 081 191
- AHO A ET AL: "COMPILERS PRINCIPLES, TECHNIQUES AND TOOLS" COMPILERS. PRINCIPLES, TECHNIQUES, AND TOOLS, READING, ADDISON-WESLEY PUBLISHING CO, US, 1986, pages II-X,1, XP002944570
- A. RALSTON, E.D. REILLY, D. HEMMENDINGER: "Encyclopedia of Computer Science" 2003, JOHN WILEY & SONS , CHICESTER UK , XP002392711 page 910 - page 913 the whole document
- A. RALSTON, E.D. REILLY, D. HEMMENDINGER: "Encyclopedia of Computer Science" 2003, JOHN WILEY & SONS , CHICESTER UK , XP002349773 page 251 - page 258 the whole document
- A. RALSTON, E.D. REILLY, D. HEMMENDINGER: "Encyclopedia of Computer Science" 2003, JOHN WILEY & SONS , CHICESTER UK , XP002349774 page 119 - page 122 page 251 - page 258 page 316 - page 319 page 481 - page 488 page 499 - page 502 page 874 - page 877 page 1223 - page 1227 page 1275 - page 1284 page 1458 - page 1461 page 1466 - page 1475 page 1578 - page 1587 the whole document
- PAPADOPOULOS G A: "Experience using an intermediate compiler target language for parallel machines" May 1997 (1997-05), MICROPROCESSORS AND MICROSYSTEMS, IPC BUSINESS PRESS LTD. LONDON, GB, PAGE(S) 511-520 , XP004081219 ISSN: 0141-9331 abstract page 1, paragraph 2 - paragraph 3 the whole document
- HANSON D R: "ICC.NET: TARGETING THE .NET COMMON INTERMEDIATE LANGUAGE FROM STANDARD C" SOFTWARE PRACTICE & EXPERIENCE, WILEY & SONS, BOGNOR REGIS, GB, vol. 34, no. 3, March 2004 (2004-03), pages 265-286, XP001046365 ISSN: 0038-0644
- GORDON A D ET AL: "TYPING A MULTI-LANGUAGE INTERMEDIATE CODE" SIGPLAN NOTICES, ASSOCIATION FOR COMPUTING MACHINERY, NEW YORK, NY, US, vol. 36, no. 3, 17 January 2001 (2001-01-17), pages 248-260, XP009018621 ISSN: 0362-1340
- SCHILLING J L: "FAIL-SAFE PROGRAMMING IN COMPILER OPTIMIZATION" ACM SIGPLAN NOTICES, ACM, ASSOCIATION FOR COMPUTING MACHINERY, NEW YORK, NY, US, vol. 28, no. 8, 1 August 1993 (1993-08-01), pages 39-42, XP000383893 ISSN: 0362-1340

## Description

The invention relates to a method for fail safe compiling of application data for the execution in a central interlocking processing unit according to the preamble of claim 1.

A signalling network comprise at least a central interlocking processing unit and one or more remote or peripheral operative units such as one or more actuators for carrying out mechanical tasks and/or one or more single or multi aspect signalling units and/or one or more sensors for measuring physical and/or chemical parameters;

The said network further comprises one or more data communication lines connecting each of the said one or more remote or peripheral operative units to the central interlocking processing unit for sending so called input data telegrams to the central interlocking processing unit and for receiving output telegrams or command telegrams generated by the central interlocking processing unit;

The said central processing interlocking unit comprising a generic hardware platform executing a generic software so called control interpreter or interlocking functional program for carrying out system managing tasks and for interpreting network specific application data expressing the logical relationship between the various remote or peripheral operative units and the application specific control rules governing the control system so called interlocking logic, so that the control interpreter applied to the said application data or interlocking logic yields the control system specific control functions.

The method comprising the steps of expressing the said application data in a first programming language having a human user friendly syntax and translating the said application data by software means, so called compilers in a second language having a machine friendly syntax i.e. a binary code which can be processed by the central interlocking processing unit.

The above disclosed control system is a so called known Solid State Interlocking system (SSI). This system is of the so called data driven kind. The architecture of the system is also known and the system comprises a computerized processing unit formed by conventional generic hardware in combination with a generic software which when executed allows the generic hardware to carry out generic read and write loops or polling cycles. The logic relationships between the various remote or peripheral operative units forming the network of the control system which are strongly dependent from the configuration of the network, i.e. the and the rules governing the control process which also are strongly interdependent form the network configuration are in the form of so called application data. Roughly said the application data represents the rules on which the generic software executed by the central processing unit operates and defines the specific interlocking functions of the system. The relationship between generic program and the application data is one in which the former acts as an interpreter for the latter. SO the generic software executed by the central processing unit is usually called central interpreter, while the application data are also called interlocking logic. Deeper and more detailed information about the method and the specific solid state interlocking system to which the method of the present invention is particularly referred is disclosed in Cribbens A.H.: Solid State Interlocking (SSI): an Integrated Electronic Signalling System for Mainline Railways. IEE Proceedings, Part B: Electric Power Applications, Volume 134, Issue 3, pp148-158. IEE (1987). Non-patent document XP002392711 is an enciclopedia article over the use of intermediate languages disclosing what they are, how they are used and for what purposes, published in the "Encyclopedia of Computer Science", 2003, JOHN WILEY & SONS, CHICESTER UK by A. RALSTON, E.D. REILLY, D. HEMMENDINGER.

As it is known to the skilled person, the architecture of the Solid State Interlocking has been developed with the aim of providing software means for control processes which allow to satisfy improved safety-requirements. Particularly, railway signalling networks requires a high degree of fail safe operation. By separating the network specific application data relatively to the network configuration and to the rules for governing the network of the control system from the generic software executed by the hardware of the central interlocking processing unit the highly critical data from the point of view of the safety requirements has been clearly separated form the generic basic software which relates to primitive tasks of managing the generic hardware platform and other managing tasks for example managing the communication lines and protocols or the like.

A basic hardware architecture of the central interlocking processing unit comprises a microprocessor cooperating with an EPROM which holds the generic program and the application data. A RAM memory is used for input and output devices. The RAM memory is also used for holding the record of the state of the control system which is called by the skilled person image of the system or internal state. The Solid State Interlocking works as follows: Incoming data telegrams are decoded and the associated application data are processed. Furthermore the data associated with outgoing command telegrams are also processed.

With respect to Solid State Interlocking, one of the problems with data preparation is that the activity is very much like programming. In some technical fields, as for example railway signalling networks, the specifications are given by control tables which loosely indicate all of the conditions that have to be satisfied before a certain operative unit can be driven to a certain action, for example before a signal can be switched from red to green to admit a train into the next track section. These tables have a defined syntax and a clear meaning for the skilled person but are also exceedingly difficult to work with due to the enormous combinatorial complexity inherently to interlocking, particularly to railway interlocking. There are no means to demonstrate completeness of the specifications and thus there is the need to verify that the code derived from the said specifications satisfies application specific safety properties, for example prohibiting the possibility for two trains to simultaneously occupy the same track section.

Traditional methods of verification are based on inspections of control tables and of the derived application data, on simple decompilers and syntax comparators as well as on testing off line on a simulated network and on line on an existing network.

Due to the high combinatorial complexity an exhaustive simulation is often not possible. Furthermore the syntactic nature of the application data makes also visual inspection practically impossible or unreliable. So the discovery of deep errors like problems in the specification data or even of slight errors like typographic errors as for example problems of coding is difficult.

As it has been already disclosed the application data has to be written by means of a so called high level language which syntax is human user friendly. The translation process of the source code into the machine or object code is carried out by means of software translation tools so called compilers.

A principal drawback of the actual way of preparing executable software means and particularly application data consists in the fact that the object code cannot be directly viewed or edited by the human user. Thus no direct editing is possible, neither for corrections of errors nor for upgrading the software means. Furthermore it is also not possible to verify directly that the compilation process of the source code into the object code is carried out correctly. This is done normally by providing an inverse compilation software tool so called decompiler which transforms the application data expressed in the object code back into application data expressed in the source code and by comparing the original application data expressed in the source code and the application data obtained by means of the said decompilation process. Due to the fact that compilation is not a simple and direct translation but provides also source code translation (e.g. macro expansion) steps decompilation cannot integrally or precisely reconstruct the application data in the source code syntax so that the comparison cannot be carried out in a completely automatic way but a human operator must verify that the differences highlighted by the comparison process are only due to the said limitations of the decompilation process and not to failures of the compiler itself.

Each time the application data has to be modified or upgraded, the human user has to modify or upgrade the source code and to carry out again the compilation process for obtaining a modified or upgraded version of application data in the object code and if validation of the compiler is needed for safety sake, to carry out again also the above described decompilation and comparison process.

When considering the above case of verifying the interlocking system by means of simulations a complete safety operation of the control system is aimed and the verifying has to be carried out at the two levels, namely at the level of the application data expressed in source code syntax (by means of code inspection) and at the level of the application data expressed in the object or machine code (by means of testing).

Further the testing of the object code requires to construct virtual models based on testing software which are not themselves free of the problems highlighted above and relating to the fail safe compilation process. The models can be very complicated since the source code is based on a very concrete syntax by starting from the real phenomenological view of the human user, while the object code only changes the point of view by applying a syntax describing the concrete phenomenological structure of the control system with a syntax which is compressible to the hardware, i.e. generally a pure binary code.

There is actually a clear need to reduce the costs and the burden of extensive testing and to enhance productivity in interlocking systems.

Languages are known which are defined as intermediate languages or codes an which are used in the compilation processes as for example disclosed in AHO A et al, "Compilers Principles, techniques and Tools", Compilers, Principles, Techniques and Tools, reading Addison-Wesley Publishing CO, US 1986 or "Encyclopedia of Computer Science" A.Ralston, E.D. Reilly, D.Hemmendinger, 2003 John Wiley & Sons, Chicester UK.

The intermediate representations used in conventional compiler technology, which are disclosed in the above documents, are used to assist the compilation process by transforming the source code into an internal data structure in memory before generating the target code. The intermediate data representation in conventional compilers cannot be used to verify the compilation process but only to assist it. A compilation verification process being so nevertheless required. The intermediate representation not being generated from both the source code and the target code. The conventional intermediate representations o data being not defined in a rigorous manner sufficient to define the semantics of the data. This facts cause that the conventional intermediate representation cannot help in overcoming current decompilation problems.

The present invention has the aim of providing a method for preparing and checking application data to be executed by a data driven control system, particularly a solid state interlocking for railway signalling networks of the kind described at the beginning which allows a satisfy the above mentioned needs in a simple and reliable way.

Particularly the invention aims to verify the compilation process from the application data in the source code notation to the application data in the object code notation.

The invention achieves the above aims with a method for fail safe compiling of application data for the execution in a central interlocking processing unit according to the preamble of claim 1 and further comprising the steps of the characterising part of claim 1.

The above programing language denominated an intermediate data language can express the interlocking system application data in an abstract way, using a syntax that is distinct but comparable to the application data's concrete source code and object code syntaxes, and in a precise way, so that the properties of the application data may be formally analysed. The intermediate data language is mainly intended to be used to verify the compilation of the application data object code from source code, but it may be used for other data preparation and verification activities.

As already indicated above, the application data intermediate code must not be confused with intermediate representations used in conventional compiler technology, which are used to assist the compilation process by transforming the source code into an internal data structure in memory before generating the target code. Firstly, the intermediate code according to the present invention can be used to verify the compilation process rather than to assist it, by generating intermediate code from both the source code and the target code. In particular, it has been introduced primarily as a diverse technique for application on a safety-critical system. Secondly, the application data intermediate code has been defined in a more rigorous manner than most intermediate representations used in conventional compiler technology, using formal specification techniques to define the semantics of the application data.

In particular the invention is directed to application data to be executed by a data driven control system, particularly a solid state interlocking for railway signalling networks and in which:
The said network comprises at least a central interlocking processing unit and one or more remote or peripheral operative units such as one or more actuators for carrying out mechanical tasks and/or one or more single or multi aspect signalling units and/or one or more sensors for measuring physical and/or chemical parameters;
The said network further comprises one or more data communication lines connecting each of the said one or more remote or peripheral operative units to the central interlocking processing unit for sending so called input data telegrams to the central interlocking processing unit and for receiving output telegrams or command telegrams generated by the central interlocking processing unit;
The said central processing interlocking unit comprising a generic hardware platform executing a generic software so called control interpreter or interlocking functional program for carrying out system managing tasks and for interpreting network specific application data expressing the logical relationship between the various remote or peripheral operative units and the application specific control rules governing the control system so called interlocking logic, so that the control interpreter applied to the said application data or interlocking logic yields the control system specific control functions;
The first language is the human user friendly language expressing the control program, the so called source code, typically a high level language, and the second language is the machine friendly language, the so called machine or object code, typically a binary code.

According to the above method the description of the configuration of a control system and of the rules governing the control process which consist in the application data can be made by setting actuators, signalling units, sensors and the interlocking logic equal to objects of a language based on an object oriented syntax.

AS known by the skilled person the object oriented language generally defines objects which when having identical properties, functions or allowing identical operations are grouped in classes. The way with which each object influences other objects is represented by the relationships or links between the objects. Within each class the operation or instructions allowed by each object or related to each object can be defined in terms of constraints.

The syntax of the object oriented language can be seen as a sort of abstract syntax as compared to the typical source code syntax and to the typical object code syntax. These languages can be considered as an intermediate language between the language of the source code and the language of the object code and by means of the said intermediate language the application data can be expressed in these abstract form with this intermediate code syntax.

The application data expressed in the intermediate code being based on an abstraction of the configuration of the control system relating to the operative units forming the control system and to the logic governing the system can be translated or compiled without any problem in a source code and/or in an object code syntax. Analogously the application data expressed in the source code syntax and/or in the object code syntax can be translated into the intermediate code syntax. Thus an automatic and complete translation of the intermediate code into source and/or object code or vice-versa can be obtained since being the intermediate code based on an abstract language the intermediate code describes the control system and its logic in a completely independent way from the concrete phenomenological perception and description of the hardware considered by the human user and from the concrete phenomenological perception and description of the hardware considered from the point of view of the hardware itself.

More particularly the syntax of the said third language indicated as the intermediate language and in which the application data expressed is described in an object oriented manner is obtained by using structured and formal specification method combining the UML and the VDM++ notations by defining classes and associations that represents the various kinds of data types and the relationships between them.

Advantageously the class definitions also contain specifications of the semantics of the application data including specifications of the constraints that the data must satisfy in order to be interpreted correctly as well as specifications of how the data is interpreted i.e. defining the meaning of the data.

The semantics specifications can be defined in terms of a VDM++ model that represents the state of the processing unit as configured for a particular controlling device or plant.

The data for a specific configuration of the control system or control network is described in the intermediate code as a set of objects and links between the said objects that are instantiated from the classes and associations specified by the syntax of the intermediate language.

UML and VDM++ are known languages which are deeper described in the following document "The VDM Tool Group, The IFAD VDM++ Language Technical Report", IFAD, October 2000.

Expressing the application data in the said third language based on an object oriented syntax allows to overcome the drawbacks disclosed above and furnishes several functional advantages.

Starting from application data expressed in the said third language i.e. the above defined intermediate code, it is always possible to represent the application data in a human user friendly manner. Upgrades of the control program due to hardware upgrades of the structure of the control system or network can be easily carried out by amending directly the application data expressed as intermediate code, i.e. in the said third language. The application data can be translated in the source and the object code syntax starting form the said application data being generated in the said third intermediate language.

Application data in the intermediate code notation can be easily printed on paper or on monitors and has a human understandable formalism and syntax. Being an abstraction the application data expressed in the third language, i.e. in the intermediate code syntax can always easily converted and represented by automatic software means in a form which can ensure rapid and unambiguous understanding by a human user. The said conversion or representation software means can be of the kind able to present the application data in a written and/or in a graphic representation.

The advantage of the method according to the invention consists also in the fact that given a particular structural configuration of a control system or network such as for example a railway network with certain track segments, signals, point actuators or the like and given a certain rules for governing the said network, the application data may be written by means of the said intermediate language in a form which is fully independent from the specific source code syntax and the specific object code syntax which is used in different interlocking systems having the same structural configuration. Thus the same application data expressed in the intermediate language can be used for each of the said interlocking systems by providing the appropriate translators of the application data expressed in the intermediate code syntax in same application data but expressed in the source code and/or in the object code notation. The intermediate code notation of the application data helps in providing further functionalities or features.

For example, when considering the compilation process and the verification of the compilation process, expressing the application data in the intermediate code notation helps in avoiding the problems due to the non correspondence between the application data originally expressed in the source code syntax and the application data obtained by decompilation from the object code notation.

Furthermore a diverse check of the application data syntax semantics (i.e. to check that it is well formed and that it complies to the capacity and processing constraints imposed by the control system and interpreter and safety-related constraints required for the application) can be done on the application data expressed in both the source code and intermediate code notations; where one check verifies that the expressions contained in the source code complies to certain textual constraints specified for the terms of the concrete syntax, and the other check verifies that the objects and links described in the intermediate code satisfy the semantics constraints specified for the classes and associations of the abstract syntax.

In this case also a double verification of the application data compilation process is carried out since preparing the application data using the intermediate code syntax allows to carry out the application data validity check while compiling the application data from the source code notation in the intermediate code notation and decompiling the application data from the object code notation in the intermediate code notations also correspond to an application data check.

In order to verify the compilation process from the application data in the source code notation to the application data in the object code notation the said diverse check and comparison can be carried out according to the following method steps:
Providing application data expressed in a first language i.e. in the source code notation;
Providing a compiler for checking and translating the application data expressed in the said first language, i.e. in the source code notation, in the application data expressed in a second language, i.e. in the object code notation;
Providing a third language for expressing the application data, the said language having an object-oriented syntax;
Providing a second compiler for translating the application data expressed in the said first language in the application data expressed in the said third language and for diversely checking the application data expressed in the said third language;
Providing a decompiler for translating the application data expressed in the second language in the said third language obtaining so called decompiled application data;
Comparing the application data compiled in the said third language and the said decompiled application data;
Defining the application data expressed in the second language as validated if no difference is detected in the said comparison;
Emitting error messages or indications for any difference detected in the said comparison.

The first language is the human user friendly language expressing the control program, the so called source code, typically a high level language, and the second language is the machine friendly language, the so called machine or object code, typically a binary code.

The said third language is the above already disclosed intermediate code and, as already stated above, it is a programming language based on an object oriented syntax, which can describe the configuration, the functions and the status control system in a more abstract way as the application data in the source code and in the object code notations.

The syntax of the object oriented language can be seen as a sort of abstract syntax as compared to the typical source code syntax and to the typical object code syntax. These language can be considered as an intermediate language between the language of the source code and the language of the object code and by means of the said intermediate language the control system and the control program or logic expressed in these abstract form can be indicated as an intermediate code.

The syntax of the said third language indicated as the intermediate language and in which the intermediate code is expressed is described in an object oriented manner using structured and formal specification method combining the UML and the VDM++ notations by defining classes and associations that represents the various kinds of data types and the relationships between them.

Advantageously the class definitions also contain specifications of the semantics of the application data including specifications of the constraints that the data must satisfy in order to be interpreted correctly as well as specifications of how the data is interpreted i.e. defining the meaning of the data.

The semantics specifications can be defined in terms of a VDM++ model that represents the state of the processing unit as configured for a particular controlling device or plant.

The data for a specific configuration of the control system or network is described in the intermediate code as a set of objects and links between the said objects that are instantiated from the classes and associations specified by the syntax of the intermediate language.

UML and VDM++ are known languages which are deeper described in the following document "The VDM Tool Group, The IFAD VDM++ Language Technical Report", IFAD, October 2000.

In both the above disclosed cases it has to be highlighted that the syntax of both the first and the second languages i.e. the source code and the object code, is a concrete syntax which is concretely related to the phenomenological concrete hardware structure of the control system or network and to the logic governing control system or network The application data expressed in the source code syntax and in the object code syntax are so strongly data related. On the contrary the intermediate code syntax is based on an abstraction of the phenomenological structure of the control system or network and of the rules governing the said control system or network.

A special case of process to be controlled by such control systems is the case of the railway signalling interlocking systems where the train traffic on the railroad network has to be controlled according to the security rules traditionally applied in such field.

The network consist in the different railroads routes formed by track segments the actuators can be the so called track circuits either for detecting the presence of the train on a so called block or for also stopping a train on one block, the actuators for displacing the railroad points, the signals for indicating free transit, caution or for stopping the passage of the train and further typical traffic control devices, signalling units or sensors.

The processing unit is a so called central interlocking processing unit which is able to execute the application data as already disclosed above.

Since in these interlocking systems very high levels of security and failsafe operation is requested due to the fact that errors can have dramatic and very dangerous consequences, a high care is set in testing and validating the application to be executed by the interlocking processing unit.

These testing and validating procedures are intended to test and validate the correctness of the application data in its form as a source code and also to validate and test the translation of the source code into the machine or object code, the so called compilation and generally also provides for simulation tools that enables to test off line the functionalities of the application data by means of a simulation at the software level i.e. without needing to connect the central interlocking processor with the real railroad network and with the real peripheral or remote operative units as listed above. In this case, normally given a certain status of the railroad network by imposing predetermined operative status of the actuators and of the signalling units and of the sensors, represented by the appropriate values of the variables which in the control program defines the concrete drive signals, status signals and measurement signals, the response of the control program executed by the interlocking processor is analysed by reading the changes that the said control program determines for the said variables, which changes may result in the driving of certain actuators or signalling units for changing its function or operative status and thus in the change of the values of the corresponding variables. Any kind of theoretically plausible operative situation of the railroad network can be tested even critical situation or the situation in which at least one or some of the actuators, signalling units or sensors has failed to operate correctly.

The present invention and the advantages deriving there from are disclosed in with further detail on the following description by means of an example and of the annexed drawings in which:
Fig. 1 is a block diagram illustrating the structure of a generic control system of the so called Solid State Interlocking kind.
Figure 2 is a block diagram illustrating the relationship between the control system and the object oriented language.
Figure 3 is an example of a control system for controlling the railway traffic in a railway network or plant illustrated in a simplified form.
Figure 4 is a block diagram illustrating how different concrete source and object code representations of the application data can be derived from the application data expressed with the intermediate language.
Figure 5 illustrates a method for failsafe verification of a compilation process by using the said intermediate language for expressing the application data with an intermediate code notation.
Figure 6 to 9 illustrates blocks diagrams of the various steps for carrying out off line simulation of the control system by means of the application data expressed in the intermediate code notation.
Figure 10 illustrates an esample of an UML object diagram showing a number of classes derived from a class named "RouteMemoryTest
Figure 11 shows an UML object diagram showing the RouteMemoryTest as a subclass of the the class named MemoryTest.
Figure 12 illustrate a diagram of the state of the route allocated to the index 53 within the part of the CIXL memory reserved for routes.
Figure 13 illustrates a diagram of the object of the RouteSetTest class that is created in the central interlocking system CIXL application data as a result of the intermediate code expression.

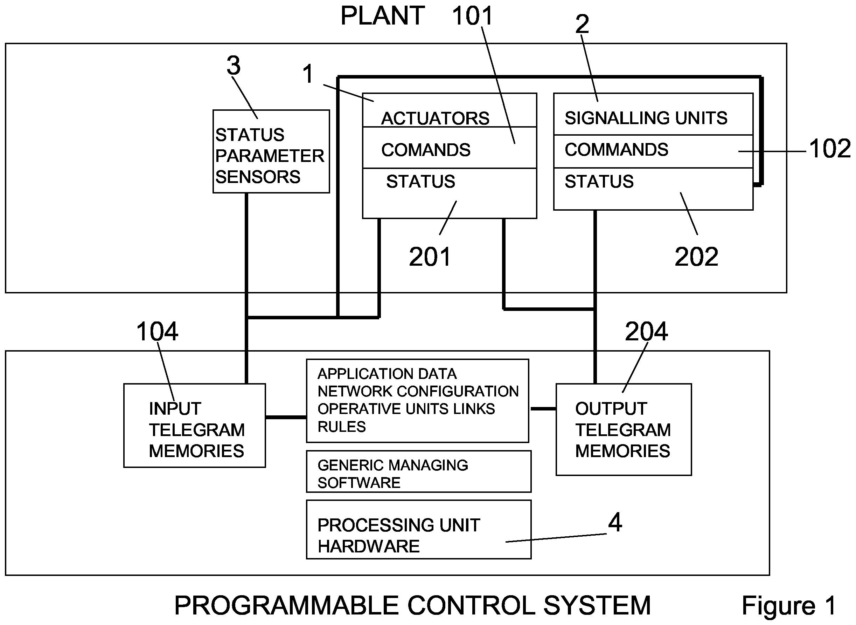

Referring to figure 1, a generic programmable control system for controlling processes of the so called Solid State Interlocking kind is illustrated schematically with a block diagram. The control system is formed by an hardware structure comprising one or more generic actuators 1 for carrying out control functions of the process. For example in a plant for feeding fluids to a user device in a controlled way which fluids has to be mixed in a certain rate these actuators can consist in regulating valves. The valves can be driven remotely by driving signals or commands 101 being equipped with driving units and may have means for indicating their operative status 201 such as different opening positions which are allowable for the valves between a maximum opening position and a closure position.

The generic plant of the control system may also comprise signalling devices for indicating in a visible manner certain status. Also the signalling units 2 have driving units for receiving and carrying out driving commands 102 and may also have means for indicating their operative status 202. Such signals can be for example multi-aspect lights or similar signalling units.

The generic plant may also be provided with sensors 3 such as pressure indicators, current or voltage indicators or the like or other sensors for measuring characteristic parameters of the plant of the control system or of the process to be controlled itself.

The plant is further characterised by a hardware configuration which consist in the list of the number and kinds of actuators and/or the number and kind of signalling units and/or the number and kinds of sensors.

Actuators 1 and/or signalling units 2 and/or sensors 3 communicates through their status indicating means with input ports 104 of a programmable central interlocking processing unit 4. Furthermore the programmable central interlocking processing unit 4 communicates with the driving units for carrying out commands 101, 102 of the actuators 1 and of the signalling units 2 by means of output ports 204.

The configuration of the hardware, particularly of the plant or network and the rules governing the plant or network for carrying out the control process and thus the rules of determining the interactions between actuators 1, signalling units 2 and sensors 3 based on their status data and on the measured data by the sensors are described in a control program so application data which can be executed by the processing unit 4.

In a Solid State Interlocking system, the processing unit 4 is formed by generic hardware comprising a processor and memories for incoming telegrams and for outgoing telegrams in combination with a generic software for managing the read and write loops and for managing the communications with the remote peripheral units such as the illustrated actuators 1, signalling units 2 and sensors 3.

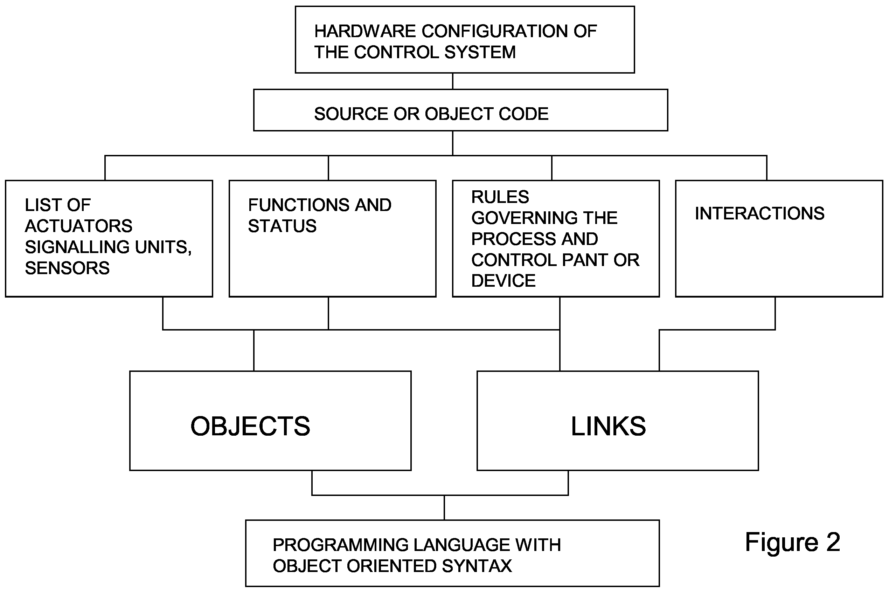

AS illustrated in figure 2, the specifications relating to the structure and kind of driving signal which are accepted by the driving units of the actuators 1 and by the signalling units 2 and specifications relating the structure, kind and meaning of the status signals generated and transmitted by the actuators 1, the signalling units 2 and the sensors 3. their logical relationships and the rules governing the control process are expressed in a further software so called application data.

When application data is loaded and executed in the central interlocking processing unit 4 together with the generic managing software, the processing unit is able to correctly interpret the incoming data telegrams generated by the actuators 1, the signalling units 2 and the sensors 3 and to generate outgoing telegrams, so called command telegrams to one or more of the said units 1, 2 and 3 in accordance with the rules governing the control process and incorporated in the application data, the so called interlocking logic.

Currently the control program is written by using a programming language based on a human user friendly syntax a so called high level language. This form of the control program is called the source code. High level languages are some kind of condensed and simplified languages very near to the human languages. In order to be executed by the processing unit the control program has to be translated by a translation program in a language based on a machine friendly syntax. The form of the expression is normally a binary code or similar. Such a form of the control program is called the machine or object code. Object code is not directly understandable by the human user so that there is no way of carrying out activities such as editing, viewing or checking the object code by human operators or if carried out such activities for example printing the object code the result is useless for the human user.

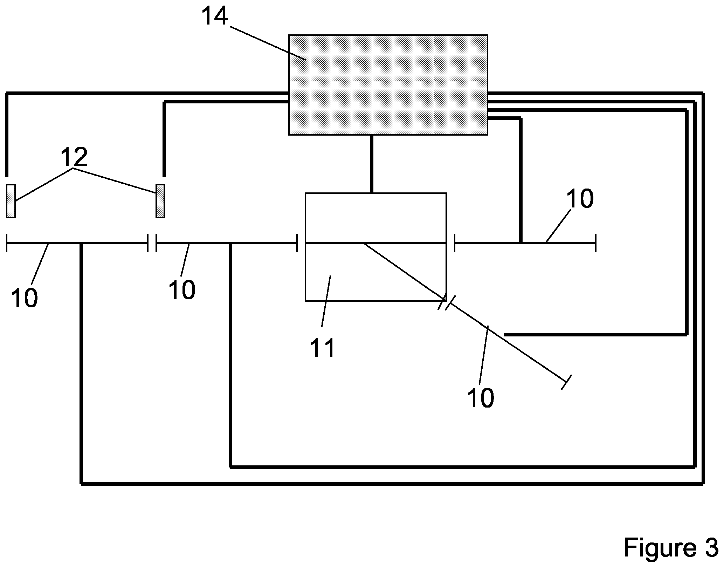

Figure 3 illustrates a simplified railroad network controlled by a so called Solid State interlocking processor. In this simplified example the railway network comprises track circuits associated each one to block indicated by 10. A switch indicated by 11 and comprising switch driving means and switch status indicator. Two signalling units as for example multi-aspect lights 12. Each of the above devices is connected by means of communication lines with the interlocking system 14 comprising an interlocking processor which executes a control program or application data. The process to be controlled is the railway traffic and the rules for controlling the process are the rules traditionally defined in each railway network.

The language for preparing the application data to be executed by the central interlocking processing unit 4 and for example by the interlocking processor 14 can be the above mentioned language indicated as the intermediate language based on the abstract syntax.

This language allows to obtain several advantages and to define new methods for preparing and checking application data or other activities in which control programs are involved.

Before entering in more practical details relating to the intermediate code and its use for different processes, a general example of the form of the intermediate code is described and briefly discussed referring to the example of the railroad interlocking system.

The following example illustrates the form that the intermediate code takes with respect to its source code and object code counter parts.
source code: R103 s
object code: [0x0620 53 0]
intermediate code: data.routeSetTest("R103")

The example illustrates the source code, object code and intermediate code syntax used to express a "rout set test", which is a test to determine whether a given route is set, where the symbol "R103" identifies the route.

The source code form of the test is expressed using mnemonics, e.g. "s" stands for set.

The object code form of the test is expressed as an object code instruction comprised of numeric codes - the first numeric (hexadecimal) code indicates the type of the object code instruction (e.g. a route set instruction) and the other two numeric (decimal) codes are parameters of the instruct (e.g. "53" is the index of the central interlocking system memory where data for the route "R103" is recorded).

The intermediate code form of the test is expressed as a function call to create an object of class "RouteSetTest" within the central interlocking system application data (denoted by the term "data"), where the function is passed as an argument the name of the route.

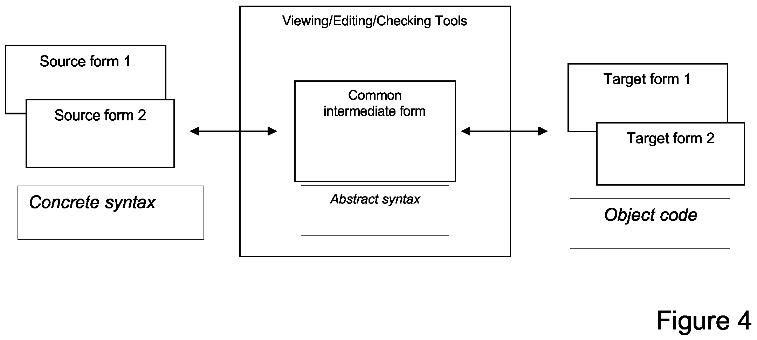

Figure 4 illustrates a block diagram representing the possible uses of the application data as expressed in the language based on the abstract syntax, the here defined intermediate code.

The intermediate form of the application data herein called intermediate code is a suitable representation for the development of various tools that can be employed during the data preparation and checking process. For example, from this representation a number of different views of the data could easily be projected for editing, viewing or checking purposes. Both source code (concrete syntax) and target code (object code) of the same data could be generated from the intermediate code. Also, alternative source forms and alternative target forms could be generated for different client applications as indicated by the different boxes source form 1 and 2 and target form 1 and 2. In this way, provided that the underlying semantics of the intermediate form was retained, a concrete syntax could be devised that was oriented towards a particular system. It would also be easy to port the application data to different target platforms. Finally, new data types could be introduced and verified in their intermediate form, with corresponding source and target forms assigned to them as appropriate and obtained by the translation (compilation or decompilation) of the application data in the said intermediate form i.e. expressed with the said intermediate language in the source form and target form languages.

The intermediate language describes the application data in a conceptual way by identifying the essential entities and attributes processed by the interpreter of the central interlocking processing unit. This form of the application data is referred to as the language's *abstract syntax,* in contrast to the concrete source code syntax used to construct the control program or the application data off-line and the concrete object code syntax used to represent the application data on-line.

The abstract syntax is described in an object-oriented manner, using a structured and formal specification method that combines the UML and the VDM++ notations, by defining classes and associations that represent the various kinds of application data types and the relationships between them. The class definitions also contain specifications of the *semantics* of the application data, including specifications of the constraints that the application data must satisfy in order for the data to be interpreted and processed correctly, as well as specifications of. how the data is interpreted (i.e. specifications that define the meaning of the data). The semantics specification is defined in terms of a VDM++ model that represents the state of the processing unit as configured for a particular system for example a particular railway operator.

The application data for a specific scheme is described in the intermediate code as a set of objects, and links between the objects, that are instantiated from the classes and associations specified by the abstract syntax.(UML and VDM++ are known languages which are deeper described in the following document "The VDM Tool Group, The IFAD VDM++ Language Technical Report", IFAD, October 2000).

The syntax (form) and semantics (meaning) of the intermediate code language is specified using a specification method that combines the use of the UML and VDM++ notations, which are standard notations used for software specification. The UML notation is graphical and therefore is useful for describing software in a pictorial way. The VDM++ is a formal notation based on mathematical logic and therefore is useful for specifying software in a precise way.

Both the UML and VDM++ languages contain constructs for defining classes of objects. As the languages use similar mechanisms for describing the properties and associations of classes, it is possible to convert between the two notations. In particular, it is possible to express the types of the class properties (which are referred to as 'attributes' in the UML and 'instance variables' in the VDM++ language) using the VDM++ notation.

The UML/VDM++ combination method is applied using two commercial development tools which are known with the denomination of Rose, from the Rational Corporation, for constructing models (sofware specifications) using the UML and the VDM++ Toolbox, from IFAD, for constructing models using the VDM++ language. A tool within the VDM++ Toolbox can be used to convert between the UML model and the VDM++ model.

In the following some special methods of treating the control program using the intermediate code are described.

### Semantics specification and verification

As described above, the new language according to the present invention, or its abstract syntax, has provided a means of defining the semantics of the application data, resulting in a model of the interpreter of the central interlocking processing unit. The language specifications have been developed using the Rational Rose and IFAD VDM++ CASE tools, which provide a number of verifications facilities, such as syntax checkers and type checkers. The IFAD VDM++ CASE tool also includes an animation facility that enables the model of the data interpreter to be executed in comparison to a model of the central interlocking processing unit state.

The ability to verify the specifications provides a degree of confidence that the language is correct, complete and in compliance with the principles governing the process to be controlled. Relating to the concrete example of the present application this principles are the principles of controlling the railway traffic in a particular railway network.

As an example of how the intermediate code is used for specifying the semantics of the data language, the following is a simplified extract of the UML/VDM++ specification of the central interlocking system application data.

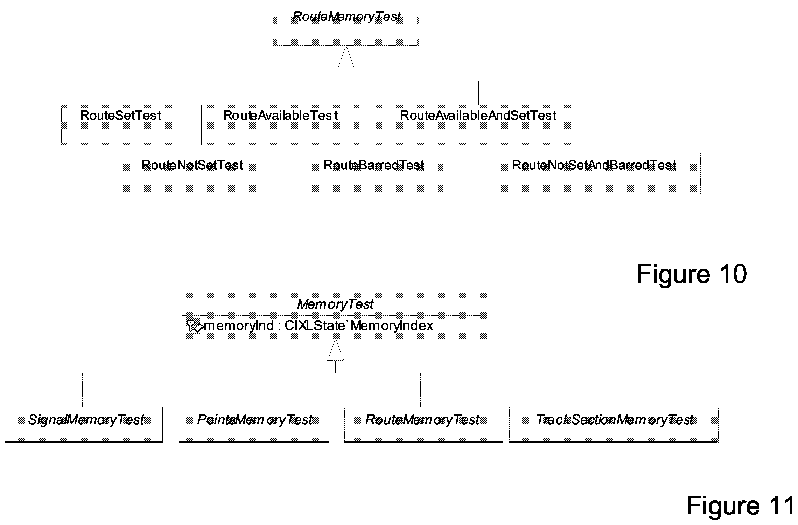

The UML object diagram of figure 10 shows a number of classes derived from a class named "RouteMemoryTest", which are used to test various properties of a given route, by examining the central interlocking system (CIXL) memory where data for the route is recorded. One of the derived classes (or subclasses) of the RouteMemoryTest class is the RouteSetTest class referred to earlier.

As shown in the UML object diagram of figure 11, the RouteMemoryTest class is itself a subclass of the class named "MemoryTest", whose subclasses are used to test various properties of given signalling objects of various types: e.g. signal, points, route, track sections etc.

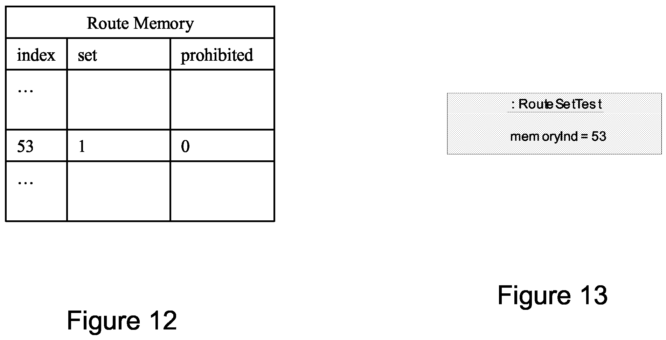

The central interlocking system CIXL memory is partitioned into a number of areas, where there is one partition for each type of signalling object. Data representing the current state of a signalling object is recorded in the relevant memory partition at an index position. For example, the figure 12 depicts the area of memory where the current states of routes are recorded, where the state of a route is represented by two bits, one indicating whether the route is set and the other indicated whether the route is prohibited. The figure 12 shows the state of the route allocated to the index 53.

The combined values of the data recorded in all memory partitions of the CIXL central interlocking system at any given time form part the current state of the central interlocking system.

As seen in the UML object diagram of figure 11 for memory tests, each memory test is associated with a given memory index (memoryInd), which is the index in the relevant central interlocking system (CIXL) memory partition containing the data to be tested with respect to the current central interlocking system CIXL state. This is formalised in the VDM++ specification of the MemoryTest class below.

```
 class MemoryTest
   instance variables
      protected memoryInd : CIXLState'MemoryIndex;
   operations
      public
      memoryIndex : () ==> CIXLState'MemoryIndex
      memoryIndex () == return memoryInd;
 end MemoryTest
```

To illustrate this, figure 13 depicts the object of the RouteSetTest class that is created in the CIXL application data as a result of the intermediate code expression:
data.routeSetTest ("R103")
that was introduced earlier in this description

In this case, the object has been assigned the memory index of 53, which is the index in the CIXL's route memory that is allocated to the route identified as "R103".

The VDM++ specification of the RouteMemoryTest class is presented below.

```
 class RouteMemoryTest is subclass of MemoryTest
   operations
     public
     consistent : CIXLApplicationData ==> bool
     consistent (data) ==
        return
          data.objectDeclared(
             mk_token(<route>), memoryInd
           );
     public
     evaluate : CIXLState * CIXLApplicationData ==> bool
     evaluate (state, data) ==
        return
          evaluateMemory(
             state.memory(mk_token(<route>), memoryInd)
           )
     pre consistent(data);
     protected
     evaluateMemory : Memory ==> bool
     evaluateMemory (memory) == is subclass responsibility;
 end RouteMemoryTest
```

The specification contains three operations that pertain to all classes of route memory tests.

The first operation specifies a condition on a route memory test with respect to the central interlocking system (CIXL) application data in which it is contained. The condition states that there must be a declaration in the central interlocking system (CIXL) application data for an object of type <route> corresponding to the route memory test's memory index. In other words, the route memory test's memory index must be allocated as an index within the central interlocking system (CIXL) route memory.

The second operation defines how the route memory test is evaluated in the context of the current CIXL state and the central interlocking system (CIXL) application data that contains the test. The operation states that the result of the evaluation is the result of evaluating the route memory test with respect to the data values of the route memory at the memory test's memory index. For example, in the case of the route set test object introduced above, it is evaluated with respect to the values of the <state> and <prohibited> data of the central interlocking system's route memory at index 53.

There is a precondition on the second operation that the route memory test is consistent with respect to the data, which is the condition stated by the first operation. This means, for instance, that in order for the example route set test to be evaluated correctly, it is assumed that there is data stored at index 53 of the central interlocking system's route memory.

The actual test that is performed on the route memory is dependent on the class of the route memory test (as denoted in the VDM++ specification by the expression "is subclass responsibility"). In the case of a route set test, the value of the <set> data of the central interlocking system's route memory at the route memory test's memory index must equal 1. This interpretation is specified in the operation of the RouteSetTest class presented below.

```
 class RouteSetTest is subclass of RouteMemoryTest
   operations
      private
      evaluateMemory : Memory ==> bool
      evaluateMemory (memory) ==
        return memory.dataEqualTo(mk_token(<set>), 1);
 end RouteSetTest
```

Thus, given the current value of the <set> data of the route memory at index 53, the example route set test would evaluate to true.

### Verification of compilation process

The off-line preparation process of the control program or of the application data using a human user friendly language includes a compilation process to convert the application data source code into the object code to be installed on-line in the processing unit, after performing the necessary syntax and semantic checks on the source code and any necessary translation of specific data of the control system, which is only supported off-line, into equivalent data that is supported by the on-line processor.

The compiler generally also performs redundant operations to verify the correct conversion of the source code into object code and to perform additional safety and complexity analysis on the application data.

The said redundant operations are directed to verify the semantic checks on the application data and to verify the correct conversion of the source code into object code. These operations are performed on code expressed in the intermediate format, which will be generated from both the source code and the compiled object code. The redundant semantic checks are performed on the intermediate source code (generated from the source code), by "executing it" and checking that the resulting objects satisfy the central interlocking system application data invariants, as specified in the VDM++ specification. The correct conversion of source code to object code is verified by performing a comparison of the intermediate code generated from the compiled object code with the intermediate code generated from the source code.

According to the present invention the above operations are performed by using the form of the control program or of the application data expressed in the new language here defined as intermediate language and which has already been disclosed in greater detail.

A translation program such as a second compiler is used to convert the application data generated in the source code format in the intermediate code format based on the said intermediate language.

A further translation program such as a decompiler is used for converting the application data expressed in the object code format in the intermediate code format based on the said intermediate language.

The object code is obtained by means of a conventional compiler process from the source code.

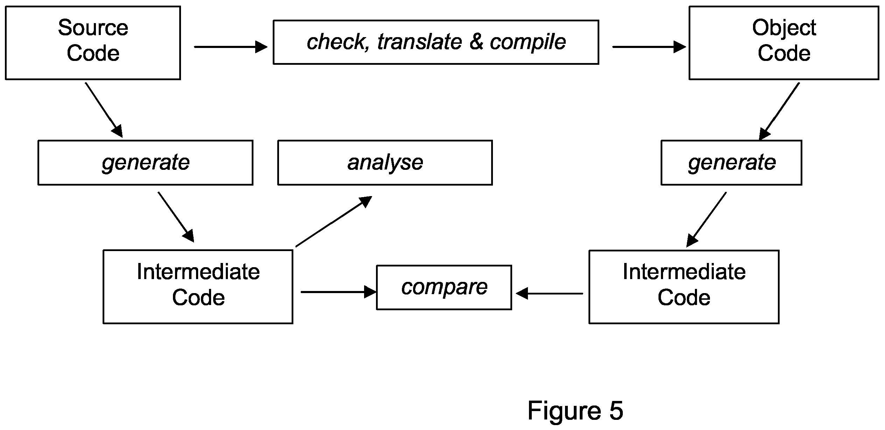

Both forms of the control program or application data in the intermediate code format obtained by translation, i.e. compilation of the source code into the said intermediate code and translation, i.e. decompilation, of the object code into the intermediate code format are then compared in order to evaluate the identity between them. Figure 5 illustrates in a block diagram the principal steps of the method for validating the compiler as described above.

A great advantage of using this method based on the new language resides in the fact that both the translation of the source code into the intermediate code and of the object code into the intermediate code are free from the typical effects of compilation and decompilation which normally prevents parts of the source code to be reconstructed by decompilation of the object code, thus introducing intrinsic systematic differences in the comparison process for validating the compiler. This technical advantage allows to carry out the comparison for validating the compilation process in practically a full automatic way.

As already explained above the use of the new language based on an abstract syntax according to the present invention allow to generate different source codes according to different high level programming languages, i.e. having a human user friendly syntax.

In the same way the use of the new language based on an abstract syntax according to the present invention allows to generate different object codes according to different machine languages, i.e. having a machine friendly syntax by starting from the one and the same intermediate code format of the application data.

### Verification of simulation

The data preparation and verification process also may include an off-line simulation of the object code. If used in conjunction with the VDM++ models of the data interpreter and of the interlocking processing unit state, the intermediate code generated during the compilation process can be used as a means of verifying the simulation.

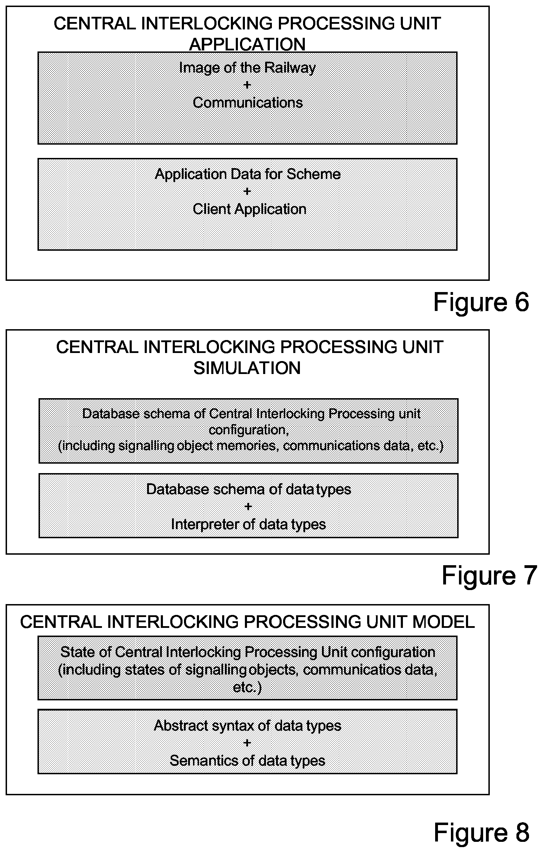

In the diagrams of figure 6 to 9 an example of such method is disclosed with greater detail.

The diagram of figure 6, describes the configuration for a particular interlocking application. Here the memory of the application is configured to hold data regarding the state of the relevant signalling objects (the image of the railway) and information regarding the communications between the central interlocking processor and the trackside objects and other interlocking subsystems, together with the compiled application data for a specific railway scheme.

The off-line simulator tool would operate on a particular representation of this configuration, which could be the target representation. The simulator tool could be described in terms of a database schema of the image of the railway and the communications information, a database schema of the specific application data, and an interpreter of the compiled data. The simulator tool would, of course, also simulate the overall behaviour of the central interlocking processing unit application (i.e. the sequencing and timing of the central processing unit events). (Figure 7)

Following the data language specifications, a VDM++ model of the central interlocking processing unit application is based on an object model of the central interlocking processing unit state, an object model comprising the intermediate form of the application data, and the formal semantics model specifying how the data is interpreted. (Figure 8)

The overall behaviour of the central interlocking processing unit application is also specified formally in an executable manner that enables the model to be fully animated for example by means of the VDM++ tools combined with the UML tools as disclosed above. Thus the behaviour of the simulation can be then compared with the behaviour of the VDM++ model. In this way, the model could serve as a means of verifying the behaviour of the simulator tool against the behaviour of the central interlocking processing unit application itself.

### Model checking

As well as defining the operational semantics of the data types, i.e. a description of how they are to be processed by the central interlocking processing unit application, it is also further possible to specify other properties concerning them for other verification purposes. Considering the particular example of a railway traffic control system by specifying transition expressions for route release data, which state the conditions under which a route can be released, the conditions under which a set of points is free to move, and the conditions that enable a route to be set, it may be possible, using a model checking approach, to verify automatically that a set of application data satisfies basic safety properties.

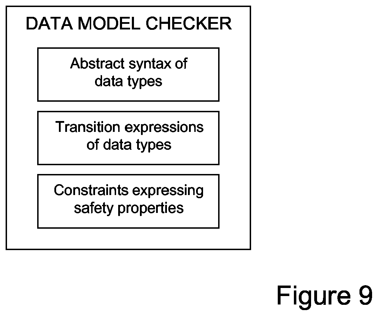

As it appears evident from above and from figure 9 the common intermediate representation of the data types serves as a base, for developing a model checking tool. That is, the same model of the data types underlying the specification of the interlocking interpreter could be used with an alternative semantics specification to perform model checking on the application data itself.

The above examples and methods disclosed in detail clearly renders evident that the new language having an abstract syntax and being used to express the control program or the application data to be executed and/or processed by the central interlocking processing unit is a very useful common format for data preparation and checking tools.

## Claims

1. A method for fail safe compiling of application data for the execution in a central interlocking processing unit comprising the following steps:
a) Providing the source code of the application data, such source code being written in a human user friendly language;
b) Providing a checker and translator program so called compiler which checks and translates said source code in an object code, such object or machine code being written in a machine friendly language having a syntax which can be interpreted by the processing unit;
And which method is further **characterised by** the following steps:
c) providing a third language for expressing the application data in a so called intermediate code notation, said language having an abstract syntax, particularly an object-oriented syntax which is different from the syntax of the user friendly language and from the machine friendly language;
d) providing a second compiler which translates said source code in an intermediate code in the syntax of the said third language;
e) providing a decompiler consisting in a translation program which translates said object code in an intermediate code in the syntax of the said third language;
f) verifying the compilation process from the source to the object code by comparing the intermediate code generated from the source code by means of the said second compiler and the intermediate code generated from the object code by means of the said decompiler and by defining the application data expressed in the second language as validated if no difference is detected in said comparison.

2. A method according to claim 1, **characterised in that**
the application data are intended to be executed by the central interlocking processing unit of a control system, the control system being of the so called data driven kind and particularly a solid state interlocking system.

3. A method according to claims 1 or 2, **characterised in that** the said third programming language or tool is based on an object oriented syntax and describing the configuration, the functions and the status of the actuators, the signalling units and the sensors of the plant or device and of the relationships between actuators, signalling units and sensors and the rules governing the control process by defining objects and links between the objects.

4. A method according to one or more of the preceding claims 1 to 3, **characterised in that** the third language based on an abstract syntax uses an object oriented syntax by using structured and formal specifications obtained by combining the UML and the VDM++ notations and by defining classes and associations that represents the various kinds of data types and the relationships between them.

5. A method according to one or more of the preceding claims 1 to 4, **characterised in that** the class definitions also contain specifications of the semantics of the application data including specifications of the constraints that the data must satisfy in order to be interpreted correctly as well as specifications of how the data is interpreted i.e. defining the meaning of the data.

6. A method according to claim 5, **characterised in that** the semantics specifications are defined in terms of a VDM++ model that represents the state of the interpreter of the processing unit as configured for a particular controlling device or plant.

## Patentansprüche

1. Verfahren zum fehlersicheren Kompilieren von Anwendungsdaten für die Ausführung in einer zentralen Stellwerksverarbeitungseinheit, umfassend die folgenden Schritte:
a) Bereitstellen des Quellcodes der Anwendungsdaten, wobei ein solcher Quellcode in eine menschen-benutzerfreundliche Sprache geschrieben wird;
b) Bereitstellen eines Überprüfer- und Übersetzerprogramms, sog. Compiler, der den Quellcode in einem Objektcode überprüft und übersetzt, wobei ein solches Objekt- oder Maschinencode in eine maschinenfreundliche Sprache mit einer Syntax geschrieben wird, die von der Verarbeitungseinheit interpretiert werden kann;
und welches Verfahren ferner durch die folgenden Schritte gekennzeichnet ist:
c) Bereitstellen einer dritten Sprache zum Ausdrücken der Anwendungsdaten in einer so genannten Zwischencode-Notation, wobei die Sprache eine abstrakte Syntax aufweist, insbesondere eine Objektorientierte Syntax, die sich von der Syntax der benutzerfreundlichen Sprache und von der maschinenfreundlichen Sprache unterscheidet;
d) Bereitstellen eines zweiten Compilers, der den Quellcode in einem Zwischencode in der Syntax der dritten Sprache übersetzt;
e) Bereitstellen eines Decompilers, der in einem Übersetzungsprogramm besteht, das den Objektcode in einem Zwischencode in der Syntax der dritten Sprache übersetzt;
f) Verifizieren des Kompiliervorgangs von der Quelle zu dem Objektcode durch Vergleichen des aus dem Quellcode erzeugten Zwischencodes mittels des zweiten Compilers und des aus dem Quellcode erzeugten Objektcodes mittels des Decompilers und durch Definieren der in der zweiten Sprache ausgedrückten Anwendungsdaten als validiert, wenn in diesem Vergleich keine Differenz detektiert wird.

2. Verfahren nach Anspruch 1, **dadurch gekennzeichnet, dass** die Anwendungsdaten sollen von der zentralen Stellwerksverarbeitungseinheit eines Steuersystems ausgeführt werden, wobei das Steuersystem nach Art eines so genannten datengesteuerten Systems, insbesondere eines elektronischen Stellwerkssystem ausgebildet ist.

3. Verfahren nach Anspruch 1 oder 2, **dadurch gekennzeichnet, dass** diese/dieses dritte Programmiersprache/Tool basiert auf einer objektorientierten Syntax und beschreibt die Konfiguration, die Funktionen und den Zustand der Aktoren, der Signalisierungseinheiten und der Sensoren der Anlage oder Einrichtung und die Beziehungen zwischen Aktoren, Signalisierungseinheiten und Sensoren und den Regeln des Steuerungsprozesses durch Definieren von Objekten und Verbindungen zwischen den Objekten.

4. Verfahren nach einem oder mehreren der vorhergehenden Ansprüche 1 bis 3, **dadurch gekennzeichnet, dass** die auf einer abstrakten Syntax basierende dritte Sprache eine objektorientierte Syntax unter Verwendung von strukturierten und formalen Vorgaben verwendet, die durch Kombination der UML und der VDM++ Notationen und durch Definieren von Klassen und Zuordnungen, die verschiedenen Arten von Datentypen und die Beziehungen zwischen diesen repräsentieren, erhalten werden.

5. Verfahren nach einem oder mehreren der vorhergehenden Ansprüche 1 bis 4, **dadurch gekennzeichnet, dass** die Klassendefinitionen auch Angaben über die Semantik der Anwendungsdaten einschließlich Vorgaben der Einschränkungen enthalten, die Daten erfüllen müssen, um korrekt interpretiert zu werden, sowie Vorgaben, wie die Daten interpretiert werden, d.h. Vorgaben, welche die Bedeutung der Daten definieren.

6. Verfahren nach Anspruch 5, **dadurch gekennzeichnet, dass** die Semantik-Vorgaben werden in Form eines VDM++-Modells definiert, das den Zustand des Interpreters der Verarbeitungseinheit repräsentiert, wie er für eine bestimmte Steuereinrichtung oder Anlage konfiguriert ist.

## Revendications

1. Procédé de compilation à sécurité intrinsèque de données d'application à exécuter dans une unité de traitement à asservissement central comprenant les étapes consistant à :
a) fournir le code source des données d'application, ledit code source étant écrit dans un langage « user friendly » ;
b) fournir un logiciel de vérification et de traduction, soi-disant compilateur, qui vérifie et traduit ledit code source dans un code objet, ledit code objet ou code machine étant écrit dans un langage « machine friendly » fondé sur une syntaxe qui peut être interprété par l'unité de traitement ;
ledit procédé étant également **caractérisé par** les étapes consistant à :
c) fournir un troisième langage pour exprimer les données d'application dans une soi-disant notation de code intermédiaire, ledit langage ayant une syntaxe abstraite, notamment une syntaxe orientéé objet, différente de la syntaxe du langage « user friendly » et du langage « machine friendly » ;
d) fournir un deuxième compilateur qui traduit ledit code source dans un code intermédiaire fondé sur la syntaxe dudit troisième langage ;
e) fournir un décompilateur consistant d'un logiciel de traduction qui traduit ledit code objet dans un code intermédiaire fondé sur la syntaxe dudit troisième langage ;
f) vérifier le procédé de compilation du code source au code objet en comparant le code intermédiaire généré à partir du code source au moyen dudit deuxième compilateur et le code intermédiaire généré à partir du code objet au moyen dudit décompilateur et en définissant les données d'application exprimées dans le deuxième langage comme validées si aucune différence n'est détectée dans ladite comparaison.

2. Procédé selon la revendication 1, **caractérisé en ce que**
les données d'application sont destinés à être exécutés par l'unité de traitement à asservissement central d'un système de commande, le système de commande étant du soi-disant type orienté par les données et notamment un système d'asservissement à état solide.

3. Procédé selon la revendication 1 ou 2, **caractérisé en ce que** ledit troisième langage ou instrument est fondé sur une syntaxe orientée objet, décrivant la configuration, les fonctions et l'état des actionneurs, des unités de signalisation et des capteurs de l'installation ou du dispositif et les relations entre les actionneurs, les unités de signalisation et les capteurs et des règles régissant le le procédé de commande en définissant des objets et des liens entre les objets.

4. Procédé selon l'une ou plusieurs des revendications précédentes 1 à 3, **caractérisé en ce que** le troisième langage fondé sur une syntaxe abstraite utilise une syntaxe orientée objet en utilisant des spécifications structurées et formelles obtenues en combinant les notations UML et VDM++ et en définissant des classes et des associations qui représentent les diverses sortes de types de données et les relations entre elles.

5. Procédé selon l'une ou plusieurs des revendications 1 à 4, **caractérisé en ce que** les définitions des classes contiennent également des spécifications de la sémantique des données d'application, y compris des spécifications des contraintes que les données doivent satisfaire pour être interprétées correctement ainsi que des spécifications de la manière d'interpréter les données, c'est-à-dire définissant la signification des données.

6. Procédé selon la revendication 5, **caractérisé en ce que** les spécifications de sémantique sont définies en termes d'un modèle VDM++ représentant l'état de l'interprète de l'unité de traitement comme configuré pour un dispositif particulier ou une installation particulière.
